# EUROPEAN PATENT APPLICATION

(11) **EP 0 772 024 A1**
(43) Date of publication of application: **07.05.1997**
(21) Application number: 96117327.5
(22) Date of filing: 29.10.1996
(51) Int. Cl.: G01C 22/02

(54) **Apparatus for detection and display of the distance travelled by a motor vehicle**

(30) Priority: 31.10.1995 IT TO950876
(71) Applicant: MAGNETI MARELLI S.p.A., 20145 Milano (IT)
(72) Inventor: Novaresi, Piergiorgio, 27100 Pavia (IT)
(74) Representative: Quinterno, Giuseppe

(57) **Abstract**

The apparatus comprises a sensor (1) operable to provide a signal (V₀) commuting between two levels, indicative of the speed of the motor vehicle, a display device (10) for providing an indication of the cumulative distance travelled by the motor vehicle, and a processing and control unit (4) arranged to control the display device (10) in dependence on the said signals emitted by the sensor (1). The apparatus further includes an alteration device (11) operable to make the signal at the input (5) of the processing and control unit (4) assume a value outside the range defined between the said two levels when the connection between the sensor (1) and the said unit (4) is interrupted, and a detector (12) operable to provide an information signal when the signal at the input (5) of the unit (4) assumes a value outside the said range.

## Description

The present invention relates to an apparatus for the detection and display of the distance travelled by a motor vehicle.

More specifically the subject of the invention is an apparatus comprising
sensor means operable to provide a signal commuting between two levels, indicative of the speed of the vehicle;
a display device operable to provide an indication of the cumulative distance travelled by the motor vehicle; and
processing and control means having an input connected to the said sensor means by a connection cable and arranged to control the display device in dependence on the signals emitted by the sensor means.

Apparatus of the above-defined type, currently known as a "mileometer" installed on board motor vehicles are sometimes subject to fraudulent manipulations for the purpose of reducing the indication of the cumulative distance travelled by the motor vehicle.

The simplest manner of "falsifying" the indication of the distance travelled by the motor vehicle in order to reduce it simply consists in disconnecting the speed sensor (which typically is associated for example with one wheel) for a while from the associated processing and control means.

For the purpose of being able to detect such manipulations of the indication of the distance travelled by a motor vehicle there have been proposed complex systems based on the comparison of the indication of the distance travelled with the overall quantity (suitably measured) of fuel consumed, and on testing the correspondence between these indications. Such systems are particularly complicated and not entirely reliable in that the fuel consumption does not always correspond to the effective distance travelled and, moreover, the distance travelled is not strictly proportional to the fuel consumption.

The object of the present invention is to provide an apparatus of the type initially defined, which will allow the disadvantages of the prior art devices to be overcome and which allows an indication of any fraudulent manipulation of the indication of the distance travelled by a motor vehicle to be achieved in a simple and economic manner.

These and other objects are achieved according to the invention by means of an apparatus of the above-specified type, characterised by the fact that it includes
alteration means operable to make the signal at the input of the processing and control means assume a value outside the range defined between the said two levels when the connection between the sensor means and the processing and control means is interrupted; and
detector means operable to provide an information signal when the input signal from the processing and control means assumes a value outside the said range.

Further characteristics and advantages of the invention will become apparent from the following detailed description given purely by way of non-limitative example with reference to the attached drawings in which:
Figure 1 is a partial electric block diagram of prior art apparatus for detecting and displaying the distance travelled by a motor vehicle;
Figure 2 is a diagram which shows, the variation of an output signal from a speed sensor of the apparatus of Figure 1, as a function of time, plotted along the abscissa;
Figure 3 is a partial block schematic circuit diagram of an apparatus according to the invention; and
Figure 4 is a graph which shows the variation of signals generated in the apparatus according to Figure 3, as a function of time plotted along the abscissa.

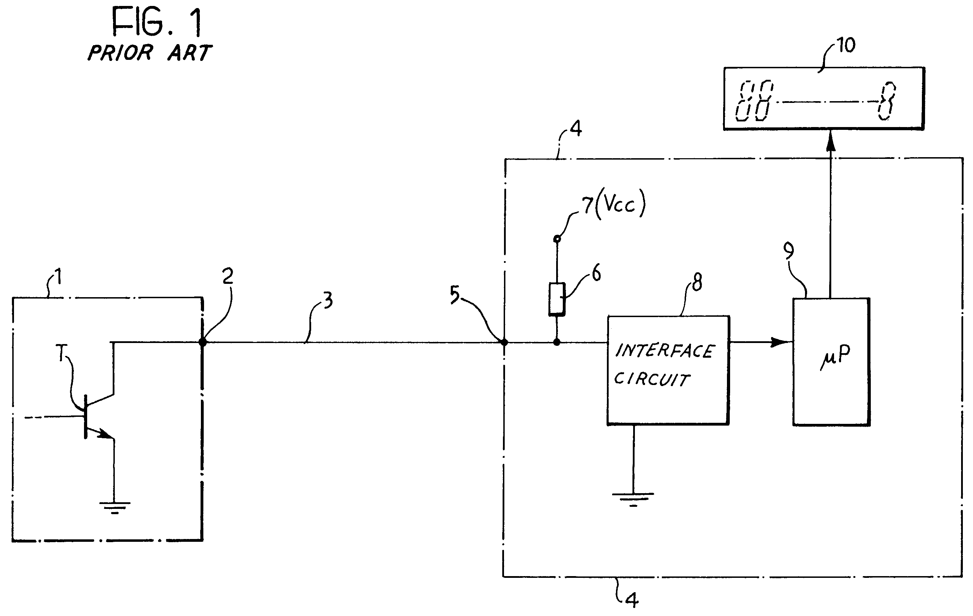

In the prior art apparatus shown in Figure 1, the reference numeral 1 generally indicates a speed sensor device associated, for example, with a wheel of a motor vehicle, operable to provide, at its output terminal 2, a signal commuting between two levels at a frequency which is indicative of the speed of the motor vehicle.

The sensor 1 is of known type and comprises an output transistor T which in the illustrated example is of npn type with its emitter grounded and its collector connected to the output terminal 2 of the sensor. The transistor T is clearly in an "open collector" configuration.

The output 2 of the sensor 1 is connected by means of a cable 3 to a processing and control circuit generally indicated 4. In the illustrated embodiment this circuit has an input terminal 5 and includes a pull-up resistor 6 between this input terminal and a terminal 7 connected (in a manner not illustrated) to the positive pole of a DC voltage supply source (V_{cc}).

The input terminal 5 is further connected to the input of an interface circuit 8 and the output of this latter is connected to a microprocessor unit 9.

The unit 9 is arranged to control a display 10 intended to provide an indication of the overall distance travelled by the motor vehicle.

In operation, when the connection 3 between the sensor 1 and the processing and control circuit 4 is intact, there is present at the output terminal 2 of the sensor 1, that is at the input terminal 5 of the circuit 4, a signal V₀ the variation of which is qualitatively illustrated in Figure 2. This signal commutes between two levels which correspond substantially to the value of the voltage V_{cc} applied to the terminal 7 and the voltage V_{cesat}, that is to say the collector-emitter saturation voltage of the transistor T.

The interface circuit 8 may for example include a threshold comparator circuit which compares the signal V₀ with a threshold Vₜₕ of value lying between V_{cc} and V_{cesat}. Downstream of the threshold comparator the interface circuit 8 may again comprise an adaptor circuit operable to ensure that the output signal from the threshold comparator has a dynamic range compatible with the input of the microprocessor unit 9.

The unit 9 is arranged to determine, on the basis of the frequency of the commutations of the received signal, the distance travelled by the motor vehicle, and to control the presentation of a corresponding signal on the display 10.

With the apparatus according to the prior art described above, if the connection 3 between the sensor 1 and the processing and control circuit 4 is interrupted, the indication of the distance progressively travelled by the vehicle presented on the display 10 is "frozen". This situation is maintained until the connection 3 between the sensor 1 and the circuit 4 is reinstated.

The processing and control circuit 4 is not able to detect nor subsequently to provide any information on possible fraudulent manipulation of the indication of the distance travelled.

An apparatus according to the invention is illustrated in Figure 3.

In this figure the parts and components already described with reference to Figure 1 have been allocated the same alphanumeric reference symbols.

In the apparatus of Figure 3, a pull-down resistor 11 is added to the sensor 1, between the collector of the output transistor T and ground.

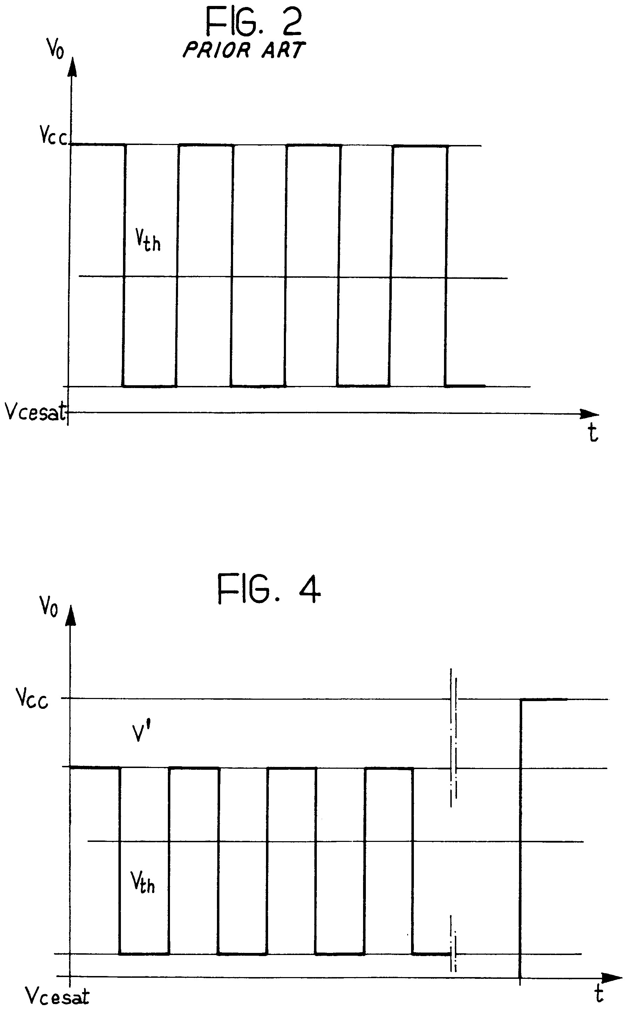

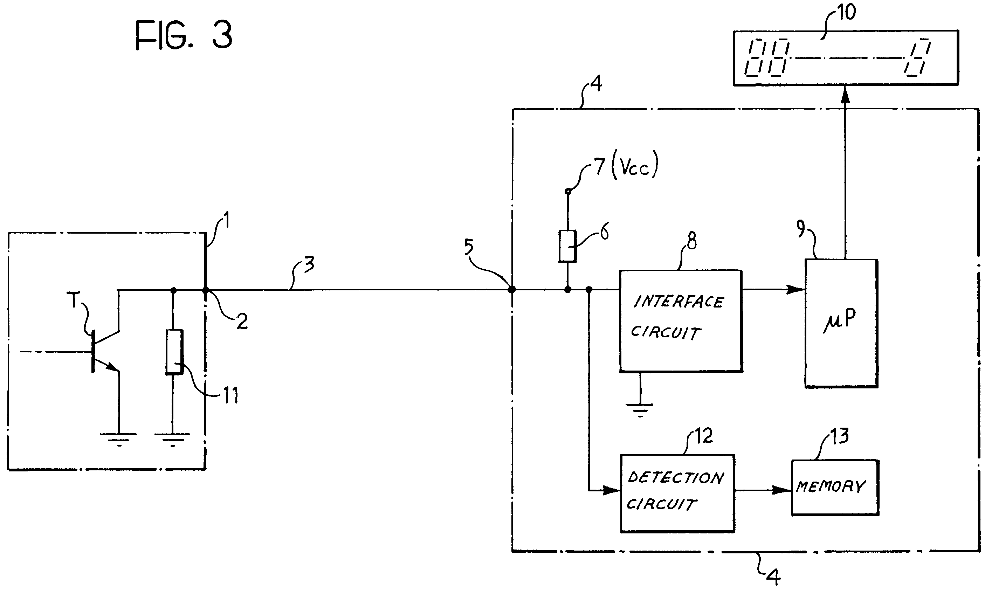

In the apparatus of Figure 3, when the connection 3 between the sensor 1 and the processing and control circuit 4 is intact the voltage at the output terminal 2 of the sensor, that is the voltage at the input terminal 5 of the circuit 4, has the qualitative variation shown in the left hand part of Figure 4 : in this case, too, the voltage commutes between two levels, the lower level being, also in this case, substantially equal to the voltage V_{cesat}, the upper level being a voltage V' less than V_{cc}. The value of the voltage V' is substantially determined by the resistance values of the resistors 6 and 11.

The interface circuit 8 of the circuit 4 of Figure 3 conveniently also includes a threshold comparator for comparing the voltage applied to the input 5 with a threshold voltage Vₜₕ lying between V' and V_{cesat}.

In the apparatus of Figure 3, if the connection 3 between the sensor 1 and the processing and control circuit 4 is interrupted, the voltage at the input terminal 5 of the said circuit goes to a value substantially equal to the voltage V_{cc} as is shown in the right hand part of Figure 4.

The processing and control circuit 4 conveniently includes a detection circuit 12 having an input connected to the terminal 5 and arranged to provide at its output, for example to a memory device 13, an information signal when the voltage at the input terminal 5 is indicative of the fact that the connection between the sensor 1 and the circuit 4 is interrupted, that is to say when the voltage lies between V' and V_{cc}.

The memory 13 is therefore able to retain information indicative of the interruption of the connection 3 between the sensor 1 and the circuit 4. Reading this memory therefore makes it possible to detect if a fraudulent manipulation of the indication of the distance travelled by the motor vehicle has taken place by disconnection of the sensor 1 from the circuit 4.

As an alternative to the arrangement described above with reference to Figure 3, the detection of the voltage at the input 5 of the circuit 4 can be effected by the microprocessor unit 9. In this case it is sufficient that the input 5 be connected through an analogue-to-digital convertor to a corresponding input of the microprocessor unit 9. This latter must obviously be arranged to analyse the values of the input voltage 5 thus acquired and to memorise information when the value of the voltage acquired is indicative of the occurrence of an interruption of the connection between the sensor 1 and the circuit 4 having taken place.

Naturally, the principle of the invention remaining the same, the embodiments and details of construction can be widely varied with respect to what has been described and illustrated purely by way of non-limitative example, without by this departing from the ambit of the present invention as defined in the attached Claims.

Thus, for example, the final transistor T of the sensor 1 could be of pnp type. In this case the resistor 6 of the processing and control circuit 4 must be a pull-down resistor connected between the input 5 and, for example, ground, whilst the resistor 11 must be correspondingly a pull-up resistor connected between the collector of the transistor T and a voltage source of predetermined value.

## Claims

1. Apparatus for detecting and displaying the distance travelled by a motor vehicle, comprising
sensor means (1) operable to provide a signal (V₀) commuting between two levels indicative of the speed of the motor vehicle;
a display device (10) operable to provide an indication of the cumulative distance travelled by the motor vehicle; and
processing and control means (4) having an input (5) connected to the said sensor means (1) by means of a connection cable (3) and arranged to control the display device (10) in dependence on signals emitted by the sensor means (1);
characterised in that it includes
alteration means (11) operable to make the input signal (5) of the processing and control means (4) assume a value outside the range defined between the said two levels when the connection between the sensor means (1) and the processing and control means (4) is interrupted; and
detector means (12) operable to provide an information signal when the input signal (5) to the processing and control means (4) assumes a value outside the said range.

2. Apparatus according to Claim 1, in which the sensor means (1) comprise an output transistor (T) in an "open collector" configuration, and the processing and control means (4) include a first (pull-up or pull-down) resistor (6) connected between the said input (5) and a first terminal (7) of predetermined electric potential;
characterised in that the said alteration means comprise a second (pull-down or pull-up) resistor (11) connected between the output of the said transistor (T) and a second terminal of predetermined electric potential.

3. Apparatus according to Claim 2, characterised in that the said detector means (12) have associated therewith memory means (13) operable to memorise the said information signals.

4. Apparatus according to Claim 3, characterised in that the said detector means (12) and/or the said memory means (13) are associated with means for measuring the time for which the input signal (5) of the processing and control means (4) assumes a value outside the said range.

5. Apparatus according to any preceding claim, in which the said processing and control means (4) comprise a microprocessor unit (9);
characterised in that the said detector means comprise the said microprocessor unit (9) which is arranged to acquire the signal present at the said input (5).
